# EUROPEAN PATENT APPLICATION

(11) **EP 1 906 106 A1**
(43) Date of publication of application: **02.04.2008**
(21) Application number: 06020524.2
(22) Date of filing: 29.09.2006
(51) Int. Cl.: F24F 6/12

(54) **Nebulization fan**

(71) Applicant: Chang, Kuei-Tang, Banchiau City Tai pei 220 (TW)
(72) Inventor: Chang, Kuei-Tang, Banchiau City Tai pei 220 (TW)
(74) Representative: Urner, Peter

(57) **Abstract**

A nebulization fan includes a casing (1), a fan (2), a nebulization generating unit (3) and a water supplying unit (4). The nebulization generating unit (3) generates vapor by vibrator nebulizer, an electrical heating nebulizer or an electrode heating nebulizer. The vapor is guided to a mouth (320) of a vapor nozzle (32) by a vapor conduit (311). Therefore, the vapor can be blew to desired area through the mouth (320). The vapor can be scattered by the wind generated by the fan (2). The water particle size in the vapor is small and indoor article will not get wet by the water particle in the vapor.

## Description

### BACKGROUND OF THE INVENTION

### Field of the Invention

The present invention relates to a fan, especially to a nebulization fan suitable for indoor use and used to reduce indoor temperature without wetting indoor articles.

### Description of Prior Art

The conventional nebulization fan uses high pressure to generate water vapor, where vapor spray is placed in front of a fan and water is ejected by high pressure to generate water vapor. The water vapor is sprayed by wind generated by the fan. When the water vapor is scattered by the fan and in contact with air, the water vapor absorbs heat from air to reduce environment temperature. However the water vapor has considerable particle size because the water vapor is generated by spraying with high pressure. The conventional nebulization fan is generally used outdoor because the water vapor may make environment wet
It is advantageous to provide an improved nebulization fan to overcome above drawbacks.

### SUMMARY OF THE INVENTION

It is the object of the present invention to provide a nebulization fan to generate vapor with smaller water particle. The vapor with smaller water particle can reduce indoor temperature without wetting indoor articles.

Accordingly, the present invention provides a nebulization fan, which includes a casing, a fan, a nebulization generating unit and a water supplying unit. The nebulization generating unit generates vapor by vibrator nebulizer, an electrical heating nebulizer or an electrode heating nebulizer. The vapor is guided to a mouth of a vapor nozzle by a vapor conduit. Therefore, the vapor can be blew to desired area through the mouth. The vapor can be scattered by the wind generated by the fan.

### BRIEF DESCRIPTION OF THE DRAWINGS

Fig. 1 shows the perspective view of the first preferred embodiment of the present invention.
Fig. 2 shows the internal sectional view of the first preferred embodiment of the present invention.
Fig. 3 shows the sectional view for the operation of the first preferred embodiment of the present invention.
Fig. 4 shows the sectional view for the operation of the first preferred embodiment of the present invention with upward inclined angle.
Fig. 5 shows the sectional view of the second preferred embodiment of the present invention.
Fig. 6 shows the sectional view of the third preferred embodiment of the present invention.
Fig. 7 shows the perspective view of the fourth preferred embodiment of the present invention.
Fig. 8 shows the perspective view of the fifth preferred embodiment of the present invention.
Fig. 9 shows the perspective view of the sixth preferred embodiment of the present invention.

### DETAILED DESCRIPTION OF THE PREFERRED EMBODIMENTS

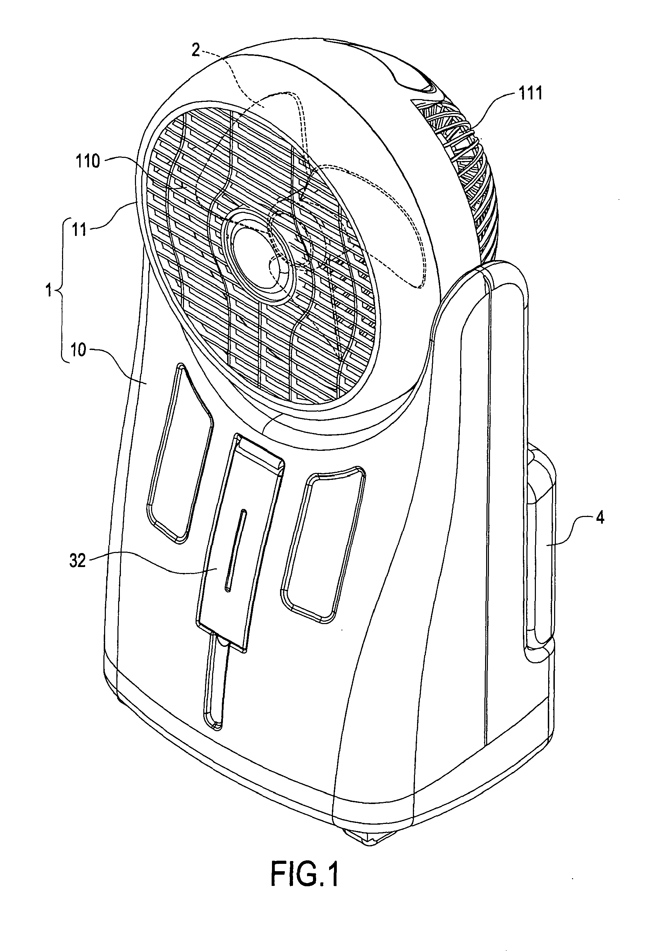

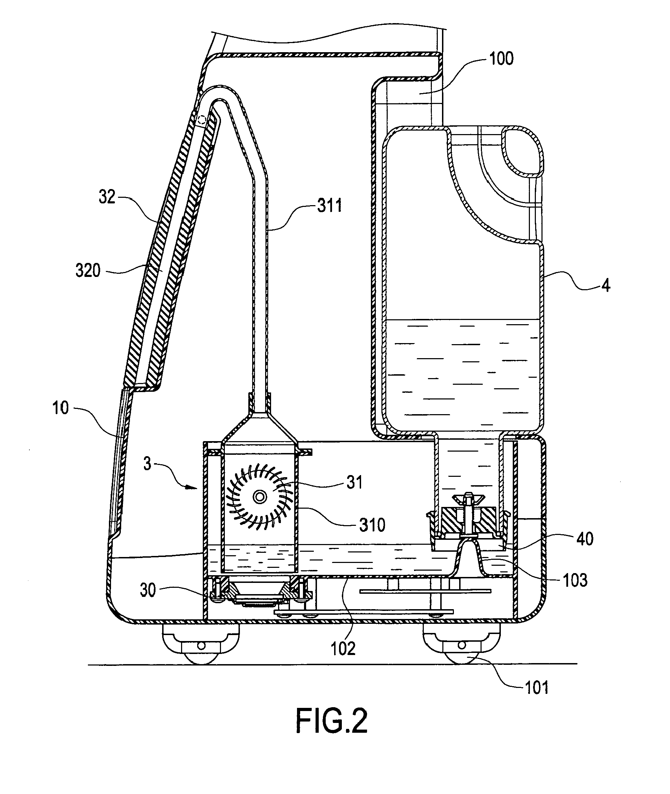

With reference to Figs. 1 and 2, the nebulization fan of the present invention comprises a casing 1, a fan 2, a nebulization generating unit 3 and a water tank 4.

The casing 1 is hollow to accommodate the fan 2, the nebulization generator 3 and the water tank 4. The casing 1 comprises a base 10 and a fan hood 11 pivotally arranged on the base 10. The base 10 is used to accommodate the nebulization generating unit 3 and the fan hood 11 is used to accommodate the fan 2. The water supplying unit 4 can be a water tank 4 and is arranged inside or outside the base 10. In the shown preferred embodiment, the base 10 comprises an indent space 100 to accommodate the water tank 4. Moreover, a plurality of rolling wheels 101 are provided below the base 10 to facilitate the movement of the nebulization fan when it is used for household.

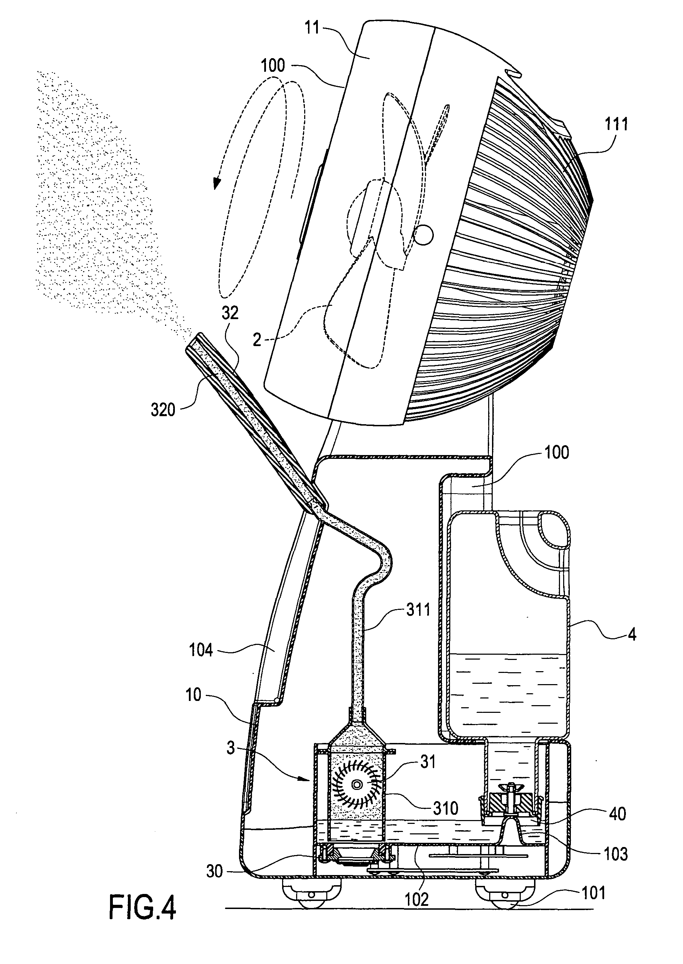

The fan 2 is arranged in the fan hood 11 of the casing 1 and comprise an wind outlet face 110 and wind inlet face 111, whereby the fan 2 operates to generate wind across the fan hood 11. The fan hood 11 is pivotally arranged on the base 10 and the inclined angle of the fan 2 can be adjusted, as shown in Fig. 4, to facilitate the wind of the fan 2 to blow to specific area.

The nebulization generating unit 3 vaporizes the water in the water supplying unit 4 by oscillation or electrical heating (with electrode). The nebulization generating unit 3 comprises a nebulization generator 30, which can be realized by vibrator nebulizer or electrical heating (electrode heating) nebulizer. The vibrator nebulizer can be performed by ultrasonic wave. The water supplying unit 4 can also be a water basin 102 or comprises a water basin arranged in the water tank 10. The nebulization generator 30 is arranged in the water basin 102. The water outlet 40 of the water supplying unit 4 is arranged downward and abutted against a post 103 of the water basin 102, whereby water can flow to the water basin 102 and the nebulization generator 30 can vaporize the water therein. A wind blower 310 is arranged in the nebulization generator 30 and comprises a blowing fan 31 for conveying vapor. The wind blower 310 is connected to a vapor conduit 311 and sends vapor through the vapor conduit 311. The vapor conduit 311 is extended outside front end of the base 10 and is pivotally connected to a vapor nozzle 32. The vapor nozzle 32 can be swung upward and downward with respect to the inclined angle of the fan 2. Therefore, vapor can be ejected through the wind outlet face 110. The vapor nozzle 32 comprises a hollow mouth 320 therein and communicated with the vapor conduit 311. The hollow mouth 320 faces outward the base 10. An accommodation tank 104 is defined in the base 10 and corresponding to the vapor nozzle 32 to accommodate the vapor nozzle 32 when the vapor nozzle 32 is not in use.

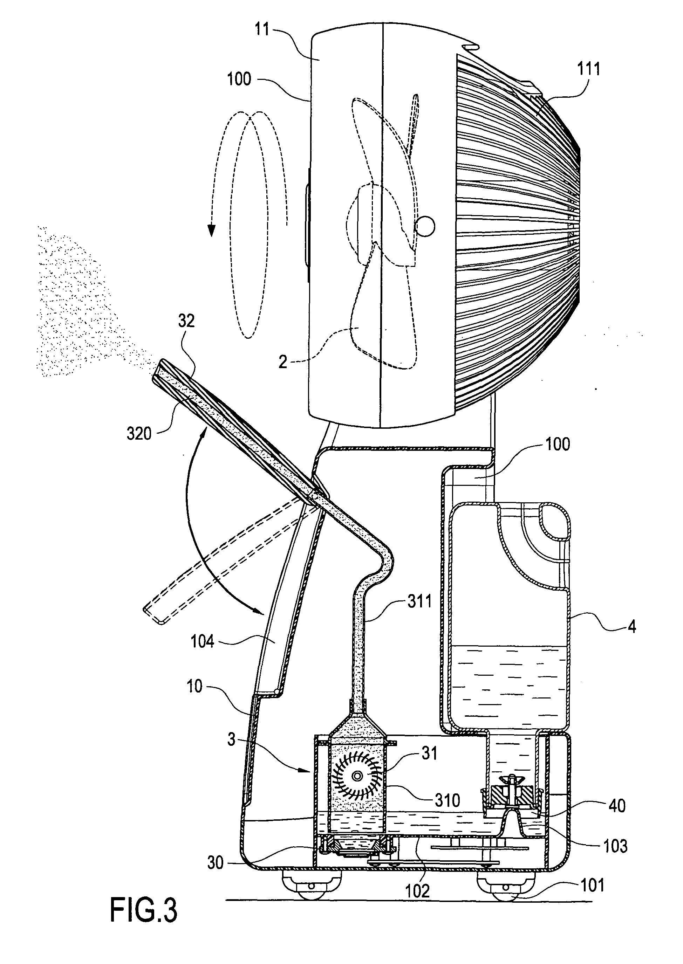

With reference to Figs. 3 and 4, vapor is ejected by the vapor nozzle 32 through the mouth 320 and is driven by wind generated by the fan 2 atop the base 10. Therefore, vapor can be conveyed to desired area for reducing temperature there. The vapor is generated by ultrasonic vibrator nebulizer or electrical heating (electrode heating) nebulizer, and the particle size of the water particle is smaller. The water particle can be fast vaporized and will not make other nearby article wet.

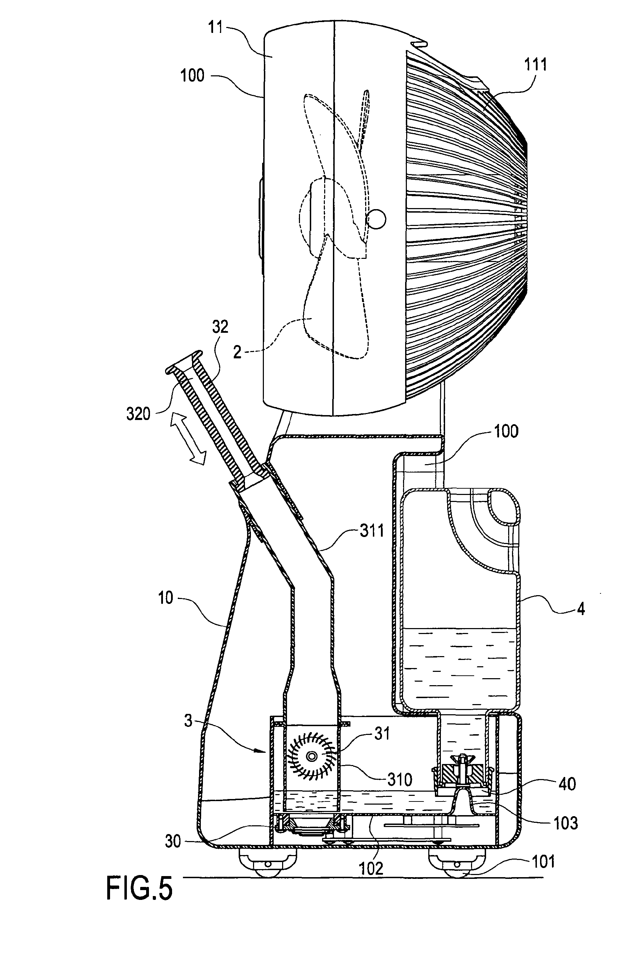

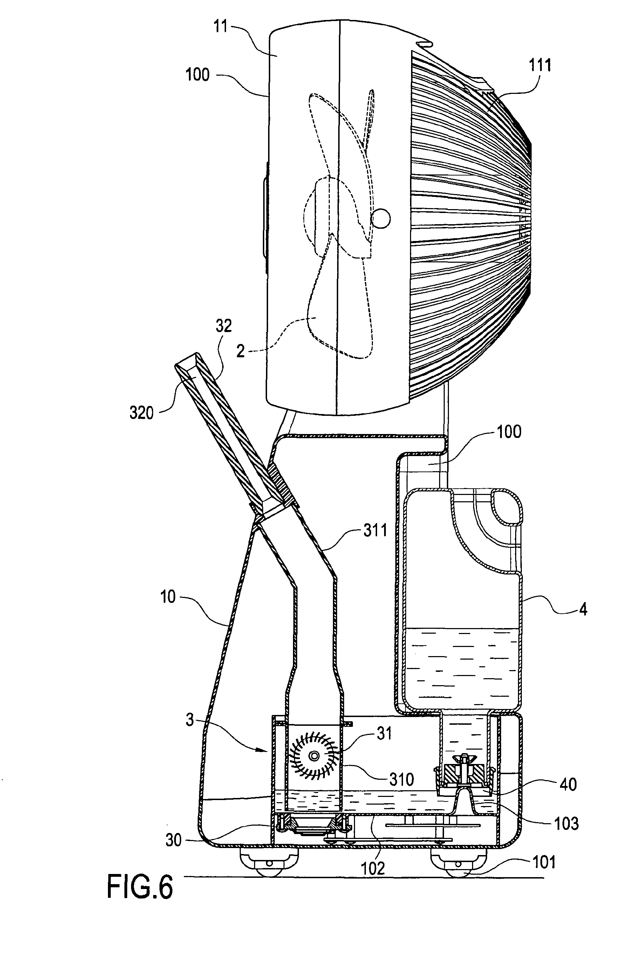

With reference to Figs. 5 and 6, the second preferred embodiment and the third preferred embodiment of the present invention are demonstrated, where the vapor nozzle 32 is arranged on the base 10 in different manner. As shown in Fig. 5, the vapor nozzle 32 is a telescopic vapor nozzle and can be sealed in the base 10. The vapor nozzle 32 can be pulled out for use. As shown in Fig. 6, the vapor nozzle 32 is fixed on front side of the base 10 and cannot be sealed.

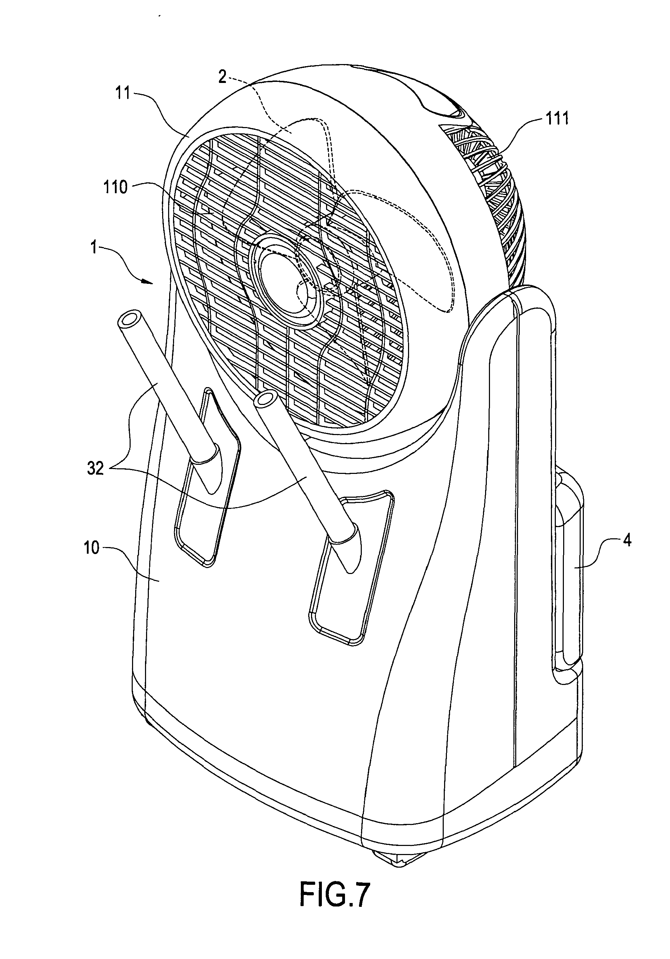

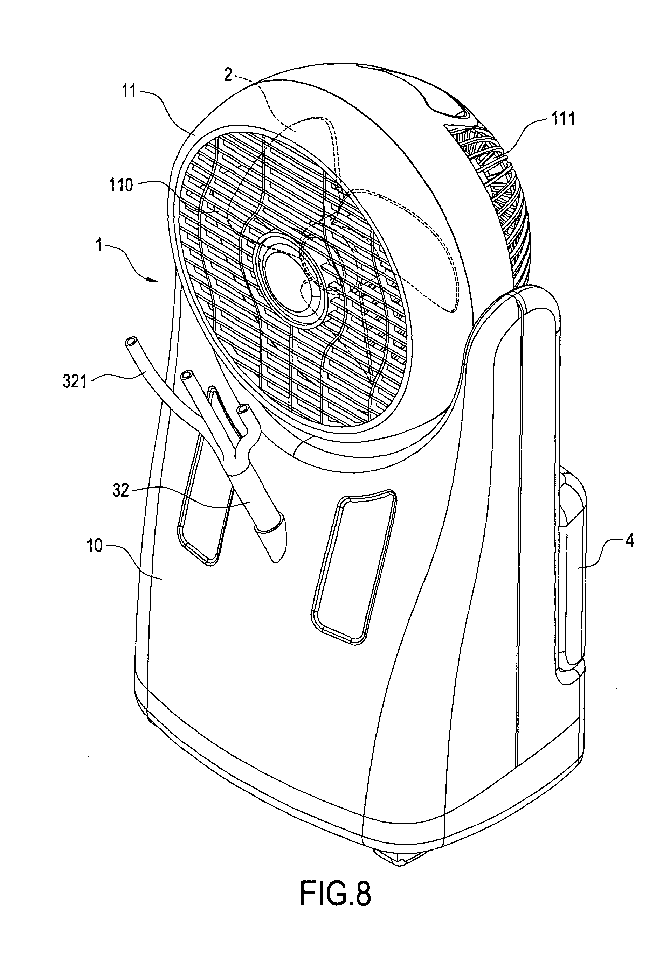

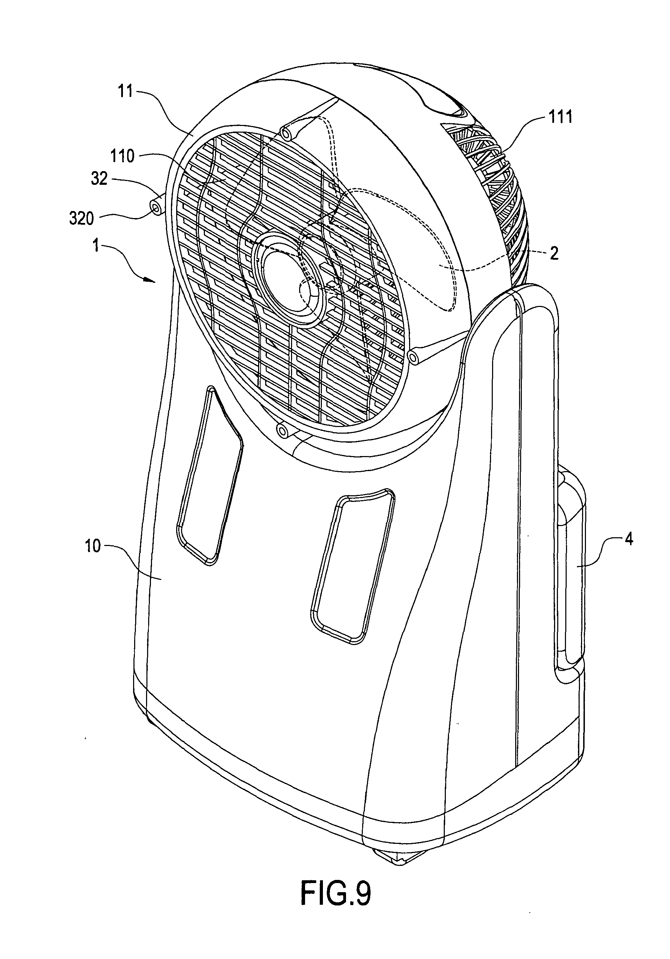

With reference to Fig. 7, the number of the vapor nozzle 32 can be multiple depending on the size of the wind outlet face 110. Multiple vapor nozzles 32 can increase amount of sprayed vapor. With reference to Fig. 8, a manifold 321 is arranged at end of the mouth 320 of the vapor nozzle 32 to diffuse the sprayed vapor. With reference to Fig. 9, the vapor nozzle 32 can also be directly arranged on the fan hood 11 and multiple vapor nozzles 32 are arranged around the fan hood 11. In the preferred embodiment shown in Fig. 9, the vapor nozzles 32 are preferably integrally formed with the fan hood 11 when the fan hood 11 is manufactured.

## Claims

1. A nebulization fan, comprising:
a casing (1) comprising a base (10) and a fan hood (11) arranged on the base (10);
a fan (2) arranged in the fan hood (11);
a nebulization generating unit (3) arranged in the base (10) and comprising a vapor conduit (311); and
a water supplying unit (4) assembled on the casing (1) to supply water to the nebulization generating unit (3),
**characterized in that** the vapor conduit (311) is connected to at least one vapor nozzle (32) and the vapor nozzle (32) comprises a mouth (320) communicated with the vapor conduit and the mouth (320) face outward the casing (1).

2. The nebulization fan as in claim 1, wherein an indent space (100) is defined at rear side of the base (1) and the water supplying unit (4) is a water tank and the water tank is arranged in the indent space (100).

3. The nebulization fan as in claim 1, further comprising a plurality of rolling wheel (101) below the base (10).

4. The nebulization fan as in claim 1, wherein the fan hood (11) is pivotally arranged on the base (10).

5. The nebulization fan as in claim 1, wherein the nebulization generating unit (3) comprises a nebulization generator (30) and a wind blower (310) corresponding to the nebulization generator (30), the wind blower (310) comprises a blowing fan (31) therein.

6. The nebulization fan as in claim 5, wherein the nebulization generator (3) is a vibrator nebulizer.

7. The nebulization fan as in claim 5, wherein the nebulization generator (3) is an electrical heating nebulizer or an electrode heating nebulizer.

8. The nebulization fan as in claim 5, wherein the water supplying unit (4) further comprises a water basin (102) in the base (10) and the nebulization generator (3) is arranged in the water basin (102), wherein water of the water supplying unit (4) flows into the water basin (102).

9. The nebulization fan as in claim 1, wherein the water supplying unit (4) is a water basin (102) in the base (10).

10. The nebulization fan as in claim 1, wherein the water supplying unit (4) is a water tank.

11. The nebulization fan as in claim 10, wherein the water supplying unit (4) further comprises a water basin (102) in the base (10).

12. The nebulization fan as in claim 1, wherein the vapor nozzle (32) has multiple number.

13. The nebulization fan as in claim 1, wherein the mouth (320) of the vapor nozzle (32) is connected to a manifold (321).

14. The nebulization fan as in claim 1, wherein the vapor nozzle (32) is arranged at front side of the base (10).

15. The nebulization fan as in claim 14, wherein the vapor nozzle (32) is a telescopic vapor nozzle.

16. The nebulization fan as in claim 1, wherein the vapor nozzle (32) is arranged at front side of the base (10), the base (10) comprises an accommodation tank (104) at front side thereof and corresponding to the vapor nozzle (32) to accommodate the vapor nozzle (32).

17. The nebulization fan as in claim 1, wherein the vapor nozzle (32) is arranged on the fan hood (11).

18. The nebulization fan as in claim 17, wherein the vapor nozzles (32) have multiple number and are arranged around the fan hood (11).
